# EUROPEAN PATENT SPECIFICATION

(11) **EP 4 187 632 B1**
(45) Date of publication and mention of the grant of the patent: **19.11.2025**
(21) Application number: 22209496.3
(22) Date of filing: 24.11.2022
(51) Int. Cl.: H01M 4/04, H01M 4/134, H01M 4/1395, H01M 4/36, H01M 4/38, H01M 4/02

(54) **ANODE FOR LITHIUM SECONDARY BATTERY AND LITHIUM SECONDARY BATTERY INCLUDING THE SAME**
ANODE FÜR LITHIUMSEKUNDÄRBATTERIE UND LITHIUMSEKUNDÄRBATTERIE DAMIT
ANODE POUR BATTERIE SECONDAIRE AU LITHIUM ET BATTERIE SECONDAIRE AU LITHIUM LA COMPRENANT

(30) Priority: 25.11.2021 KR 20210164033
(43) Date of publication of application: 31.05.2023
(73) Proprietor: SK On Co., Ltd., Seoul 03161 (KR)
(72) Inventor: JEONG, Kwang Ho, 34124 Daejeon (KR); KIM, Sung Do, 34124 Daejeon (KR); LIM, Jong Hwi, 34124 Daejeon (KR)
(74) Representative: Stolmár & Partner Patentanwälte PartG mbB

(56) References cited:
- EP-A1- 4 131 475
- WO-A1-2021/059706
- CN-B- 112 018 327
- US-A1- 2020 365 883

## Description

### CROSS-REFERENCE TO RELATED APPLICATION AND CLAIM OF PRIORITY

This application claims priority to Korean Patent Application No. 10-2021-0164033 filed on November 25, 2021 in the Korean Intellectual Property Office (KIPO).

### BACKGROUND

### 1. Field

The present invention relates to an anode for a lithium secondary battery and a lithium secondary battery including the same. More particularly, the present invention relates to an anode including a multi-layered anode active material layer and a lithium secondary battery including the same.

### 2. Description of the Related Art

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is being developed and applied as a power source of an eco-friendly vehicle such as a hybrid automobile.

The secondary battery includes, e.g., a lithium secondary battery, a nickel-cadmium battery, a nickel-hydrogen battery, etc. The lithium secondary battery is highlighted due to high operational voltage and energy density per unit weight, a high charging rate, a compact dimension, etc.

For example, the lithium secondary battery may include an electrode assembly including a cathode, an anode and a separation layer (separator), and an electrolyte immersing the electrode assembly. The lithium secondary battery may further include an outer case having, e.g., a pouch shape for accommodating the electrode assembly and the electrolyte.

Recently, as an electric vehicle industry is being developed, a high-capacity lithium secondary battery is also being developed to enable long-distance operation with a single charge. To provide a high-capacity anode, a silicon-based anode active material is being used. The silicon-based anode active material may provide an increased capacity, but may have a low conductivity to increase a resistance of the anode.

Thus, researches for developing an anode having a reduced electrical resistance while having an increased capacity are conducted by using the silicon-based anode active material. For example, Korean Published Patent Application No. 10-2020-0055448 discloses a multi-layered anode including a silicon-based compound, which may not provide sufficient low-resistance properties. Further, WO 2021/059706 A1, CN 112 018 327 B, and US 2020/365883 A1 disclose an anode including two anode active material layers.

### SUMMARY

According to an aspect of the present invention, there is provided an anode for a lithium secondary battery having improved capacity and electrical property.

According to an aspect of the present invention, there is provided a lithium secondary battery including an anode for a lithium secondary battery that has improved capacity and electrical property.

An anode for a lithium secondary battery includes an anode current collector, and an anode active material layer including a first anode active material layer and a second anode active material layer sequentially disposed on a surface of the anode current collector. Each of the first anode active material layer and the second anode active material layer includes a silicon-based active material. A ratio of a content of the silicon-based active material in the second anode active material layer relative to a content of the silicon-based active material in the first anode active material layer among a total content of the silicon-based active material included in the anode active material layer is 2 or more, and less than 5. The second anode active material layer includes a second binder including at least one selected from the group consisting of polyacrylic acid, polyvinyl alcohol, polyacrylonitrile, polyacrylamide, polyvinyl acetate and a copolymer thereof. An amount of the second binder is in a range from 1 wt% to 20 wt% based on a total weight of the second anode active material layer.

In some embodiments, the first anode active material layer may include a styrene-butadiene rubber (SBR) as a first binder.

In some embodiments, the silicon-based active material may include at least one selected from the group consisting of silicon (Si), a silicon alloy, a silicon oxide, a silicon-carbon (Si-C) composite and a silicon alloy-based carbon composite.

In some embodiments, the silicon oxide includes SiOx (0<x<2).

In some embodiments, a content of the silicon-based active material based on a total weight of the anode active material layer may be in a range from 1 wt% to 20 wt%.

In some embodiments, a content of the silicon-based active material based on a total weight of the anode active material layer may be in a range from 4 wt% to 15 wt%.

In some embodiments, the second anode active material layer may further include a carbon-based active material.

In some embodiments, the carbon-based active material may include at least one selected from the group consisting of artificial graphite, natural graphite, hard carbon, soft carbon, coke, carbon black and carbon fiber.

In some embodiments, the first anode active material layer may be in contact with the surface of the anode current collector, and the second anode active material layer may be in contact with a top surface of the first anode active material layer.

A lithium secondary battery includes the anode for a lithium secondary battery according to embodiments as described above, and a cathode facing the anode.

According to embodiments of the present invention, an anode for a lithium secondary battery includes an anode active material layer having a multi-layered structure. The anode active material layer includes a silicon-based active material, and includes a first anode active material layer, and a second anode active material layer sequentially formed on a surface of an anode current collector. A ratio of a content of the silicon-based active material included in the second anode active material layer relative to a content of the silicon-based active material included in the first anode active material layer may be adjusted, so that high-capacity and low-resistance properties of the anode may be enhanced.

In exemplary embodiments, the anode active material layer may include a second binder in the second anode active material layer to improve life-span and cycle properties of the battery by alleviating expansion and contraction of the silicon-based active material during charging and discharging.

### BRIEF DESCRIPTION OF THE DRAWINGS

FIG. 1 is a schematic cross-sectional view illustrating an anode for a lithium secondary battery in accordance with exemplary embodiments.
FIGS. 2 and 3 are a schematic plan view and a schematic cross-sectional view, respectively, illustrating a lithium secondary battery in accordance with exemplary embodiments.

### DETAILED DESCRIPTION OF THE EMBODIMENTS

According to embodiments of the present invention, there is provided an anode including a multi-layered anode active material layer and including a silicon-based active material in a predetermined content ratio, and a lithium secondary battery including the anode.

Hereinafter, the present invention will be described in detail with reference to exemplary embodiments and the accompanying drawings. The present invention is defined by the appended claims.

The terms "first" and "second" used herein do not limit the number or an order of objects, but are relatively used to distinguish different elements.

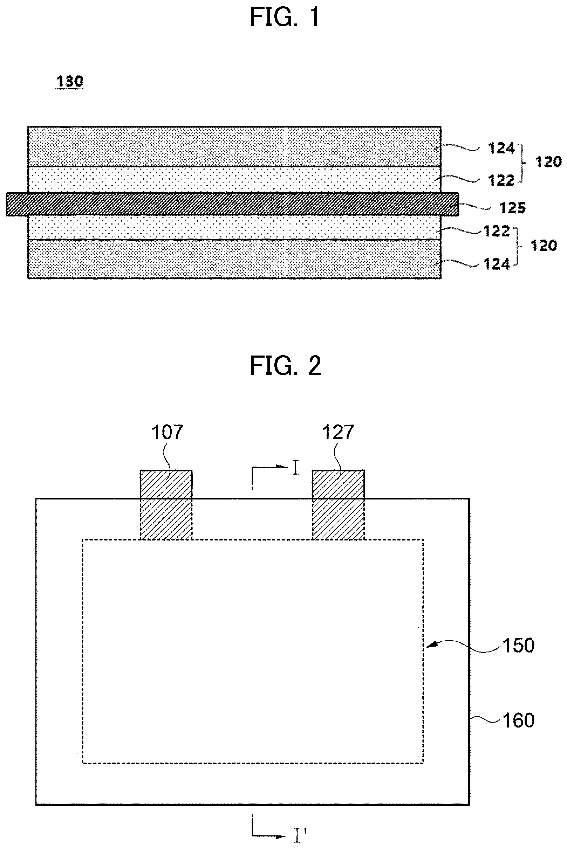

FIG. 1 is a schematic cross-sectional view illustrating an anode for a lithium secondary battery in accordance with exemplary embodiments.

Referring to FIG. 1, an anode 130 includes an anode current collector 125 and an anode active material layer formed by coating an anode active material on the anode current collector 125.

The anode active material layer 120 may have a multi-layered structure (e.g., a double-layered structure) including a plurality of anode active material layers. According to embodiments of the present invention, the anode active material layer 120 includes a first anode active material layer 122 and a second anode active material layer 124.

The multi-layered structure of the anode active material layer 120 may be used to improve an interlayer adhesion of the anode. Accordingly, an electrode stability may be improved to enhance cycle and life-span properties.

For example, the anode current collector 125 may include gold, stainless steel, nickel, aluminum, titanium, copper or an alloy thereof, preferably copper or a copper alloy.

The anode active material layer 120 may be formed on at least one surface of the anode current collector 125. The anode active material layer 120 may be coated on upper and lower surfaces of the anode current collector 125. The anode active material layer 120 may directly contact the surface of the anode current collector 125.

In exemplary embodiments, the first anode active material layer 122 may be directly formed on the surface of the anode current collector 125. The second anode active material layer 124 may be directly formed on the surface of the first anode active material layer 122.

The first anode active material layer 122 and the second anode active material layer 124 may include a first anode active material and a second anode active material, respectively. The first anode active material and the second anode active material may include a silicon-based active material. A silicon-based active material included in the first anode active material layer 122 and a silicon-based active material included in the second anode active material layer 124 may be the same as or different from each other.

For example, the silicon-based active material may include silicon (Si), a silicon alloy, a silicon oxide, a silicon-carbon (Si-C) composite or a silicon alloy-based carbon composite. These may be used alone or in combination therefrom.

Preferably, the silicon-based active material may include the silicon oxide. The silicon oxide may include SiOx (0<x<2), and may include a SiOx (0<x<2) containing a lithium or magnesium compound. For example, the SiOx containing the lithium or magnesium compound may include a SiOx (0<x<2) pretreated with lithium or magnesium. For example, the SiOx (0<x<2) including the lithium or magnesium compound may include lithium silicate or magnesium silicate.

In some embodiments, the silicon-carbon (Si-C) composite may include, e.g., silicon carbide (SiC) or silicon-carbon particles having a core-shell structure.

A ratio of a content of the silicon-based active material included in the second anode active material layer 124 relative to a content of the silicon-based active material included in the first anode active material layer 122 among a total content of the silicon-based active material included in the anode active material layer 120 is 2 or more, and less than 5. In the above range, an electrode resistance may be lowered while achieving a high capacity by using the silicon-based active material.

If the content ratio of the silicon-based active material is 5 or more, an imbalance of expansion between the first anode active material layer 122 and the second anode active material layer 124 may be caused when a volume of the electrode is expanded, thereby reducing electrode stability and battery life-span.

If the content ratio of the silicon-based active material is less than 1.25, the resistance of the anode 130 may not be sufficiently reduced.

The content of the silicon active material included in the first anode active material layer 122 and the second anode active material layer 124 may be adjusted based on the total amount of the silicon-based active material included in the anode active material layer 120. Accordingly, an entirely high-capacity and low-resistance structure may be designed for the anode active material layer 120. Additionally, lithiation may be promoted from a surface of the anode 130, so that mobility of lithium ions may be increased, thereby improving rapid charging properties.

In some embodiments, the content of the silicon-based active material based on a total weight of the anode active material layer 120 may be in a range from about 1 wt% to 40 wt%, preferably from about 1 wt% to 20 wt%, more preferably 4 wt% to 15 wt%. Within the above range, a balance between the rapid charging properties and the life-span stability may be properly maintained.

In some embodiments, the content of the silicon-based active material included in the first anode active material layer 122 based on the total weight of the anode active material layer 120 may be in a range from 1 wt% to 10 wt%, preferably from about 1 wt% to 5 wt%.

In some embodiments, the content of the silicon-based active material included in the second anode active material layer 124 based on the total weight of the anode active material layer 120 may be in a range from 1 wt% to 10 wt%, preferably from 2 wt% to 9 wt%.

In the above-described range of the content of the silicon-based active material included in each layer, low resistance properties, rapid charging properties and life-span stability may be achieved as described above.

In some embodiments, the anode active material may further include a carbon-based active material. The carbon-based active material may include, e.g., artificial graphite, natural graphite, hard carbon, soft carbon, coke, carbon black, carbon fiber, etc.

In some embodiments, the carbon-based active material may include artificial graphite or natural graphite. In an embodiment, artificial graphite may be used as the carbon-based active material. Artificial graphite may have relatively improved life-span properties compared to those from natural graphite. Accordingly, deterioration of the electrode life-span and stability of the lithium secondary battery may be prevented.

In some embodiments, a mixture of artificial graphite and natural graphite may be used as the carbon-based active material. In this case, a content of artificial graphite in the mixture may be greater than a content of natural graphite in the mixture. For example, a weight ratio of artificial graphite and natural graphite in the mixture may be in a range from 9:1 to 7:3. Within the above range, additional capacity/power improvement may be obtained from natural graphite while improving mechanical and chemical stability of the anode or the secondary battery from artificial graphite.

In some embodiments, each of the first anode active material layer 122 and the second anode active material layer 124 may include carbon nanotube (CNT) as a conductive material. Carbon nanotube as a linear conductive material may be included, so that conductivity in the anode active material layer 120 may be more effectively improved, and the rapid charging properties may be further improved through a combination with the silicon-based active material.

The second anode active material layer 124 includes a second binder. The second binder includes at least one of polyacrylic acid, polyvinyl alcohol, polyacrylonitrile, polyacrylamide, polyvinyl acetate or a copolymer thereof. Mechanical strength may be improved and electrode volume expansion may be efficiently controlled by the second binder.

The above-described second binder is included in an amount from 1 wt% to 20 wt% based on a total weight of the second anode active material layer 124. If the content of the second binder is less than 1 wt%, the volume expansion may not be sufficiently suppressed, and cycle properties may be degraded. If the content of the second binder exceeds 20 wt%, a sufficient capacity increase by the silicone-based active material may not be obtained.

In some embodiments, the first anode active material layer 122 may include a first binder. The first binder may include an aqueous binder, e.g., a styrene-butadiene rubber (SBR). In an embodiment, the first binder may include polyacrylic acid, polyvinyl alcohol, polyacrylonitrile, polyacrylamide, polyvinyl acetate or a copolymer thereof.

In an embodiment, the first anode active material layer 122 may include carboxymethyl cellulose (CMC) as a thickener together with the SBR binder as the first binder.

A first anode slurry may be prepared by mixing and stirring the first anode active material with a binder, a conductive material and/or a dispersing agent in a solvent. The first anode slurry may be coated on at least one surface of the anode current collector 125, and then dried and pressed to form the first anode active material layer 122. The first anode active material may include the above-described silicon-based active material.

The binder may include the first binder as described above, and preferably may include the SBR binder together with CMC. In a preferable embodiment, the conductive material may include carbon nanotubes (CNT).

In some embodiments, a content of the first anode active material may be in a range from 90 wt% to 98 wt%, a content of the binder may be in a range from about 1 wt% to 5 wt%, a content of the conductive material may be in a range from about 0.1 wt% to about 5 wt%, and a content of the thickener may be in a range from about 0.5 wt% to about 5 wt%, based on a total solid content of the first anode slurry.

A second anode slurry may be prepared by mixing and stirring the second anode active material with a binder, a conductive material and/or a dispersing agent in a solvent. The second anode slurry may be coated on a surface of the first anode slurry, and then dried and pressed to form the second anode active material layer 124.

The second anode active material may include the above-described silicon-based active material. The binder may include the above-mentioned second binder, and may preferably include polyacrylic acid, polyvinyl alcohol, polyacrylonitrile, polyacrylamide, polyvinyl acetate or a copolymer thereof. The conductive material may include carbon nanotube (CNT).

In some embodiments, a content of the second anode active material may be in a range from 90 wt% to 98 wt%, a content of the binder may be in a range from about 1 wt% to 5 wt%, and a content of the conductive material may be in a range from about 0.1 wt% to about 5 wt% based on a total solid content of the first anode slurry.

The first anode active material layer 122 and the second anode active material layer 124 may each include silicon oxide (SiOx, 0<x<2). Additionally, the ratio of the silicon oxide content of the second anode active material layer 124 relative to the first anode active material layer 122 may be adjusted, so that high capacity/rapid charging properties of the anode 130 and low resistance properties of the electrode may be balanced and improved.

Further, the second anode active material layer 124 may contain the second binder to suppress expansion and contraction of the silicon-based active material while being charged and discharged so that the life-span and cycle properties of the battery may be improved.

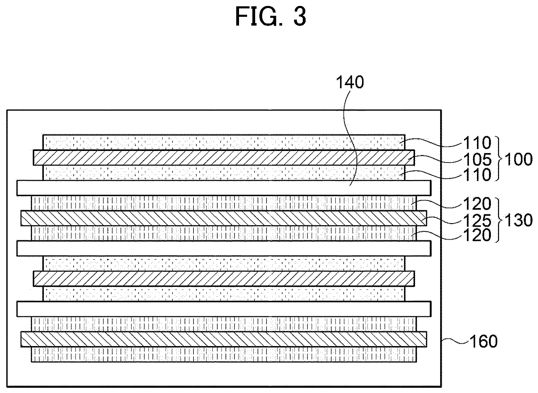

FIGS. 2 and 3 are a schematic plan view and a schematic cross-sectional view, respectively, illustrating a lithium secondary battery in accordance with exemplary embodiments.

Referring to FIGS. 2 and 3, the lithium secondary battery includes a cathode 100 and an anode 130, and may further include a separation layer 140 interposed between the cathode 100 and the anode 130.

The cathode 100 may include a cathode active material layer 110 formed by coating a cathode active material to the cathode current collector 105. The cathode active material may include a compound capable of reversibly intercalating and de-intercalating lithium ions.

In exemplary embodiments, the cathode active material may include lithium-transition metal composite oxide particles. For example, the lithium-transition metal composite oxide particles may include nickel (Ni), and may further include at least one of cobalt (Co) and manganese (Mn).

For example, the lithium-transition metal composite oxide particles may be represented by Chemical Formula 1 below.

[Chemical Formula 1] LiₓNi_{1-y}M_{y}O_{2+z}

In Chemical Formula 1, 0.9≤x≤1.2, 0≤y≤0.7, and -0.1≤z≤0.1. M may include at least one element selected from the group consisting of Na, Mg, Ca, Y, Ti, Zr, Hf, V, Nb, Ta, Cr, Mo, W, Mn, Co, Fe, Cu, Ag, Zn, B, Al, Ga, C, Si, Sn and Zr.

In some embodiments, a molar ratio or a concentration (1-y) of Ni in Chemical Formula 1 may be 0.8 or more, and may preferably exceed 0.8.

Ni may serve as a transition metal related to power and capacity of the lithium secondary battery. Therefore, as described above, the high-Ni composition in the lithium-transition metal composite oxide particle may be employed, so that a high-capacity cathode and a high-capacity lithium secondary battery may be implemented.

However, as the content of Ni increases, long-term storage stability and life-span stability of the cathode or the secondary battery may be relatively deteriorated. In exemplary embodiments, life-span stability and capacity retention may be improved by the introduction of Mn while maintaining electrical conductivity and power by including Co.

In some embodiments, the cathode active material or the lithium-transition metal composite oxide particle may further include a coating element or a doping element. For example, the coating element or doping element may include Al, Ti, Ba, Zr, Si, B, Mg, P, W, V, an alloy thereof, or an oxide thereof. These may be used alone or in combination thereof. The cathode active material particle may be passivated by the coating or doping element, thereby further improving stability and life-span even when a penetration of an external object occurs.

A slurry may be prepared by mixing and stirring the cathode active material with a binder, a conductive material and/or a dispersive agent in a solvent. The slurry may be coated on the cathode current collector 105, dried and pressed to form the cathode 100.

The cathode current collector 105 may include, e.g., stainless steel, nickel, aluminum, titanium, copper or an alloy thereof, preferably may include aluminum or an aluminum alloy.

The binder may include an organic based binder such as a polyvinylidene fluoride-hexafluoropropylene copolymer (PVDF-co-HFP), polyvinylidenefluoride (PVDF), polyacrylonitrile, polymethylmethacrylate, etc., or an aqueous based binder such as styrene-butadiene rubber (SBR) that may be used with a thickener such as carboxymethyl cellulose (CMC).

For example, a PVDF-based binder may be used as a cathode binder. In this case, an amount of the binder for forming the cathode active material layer may be reduced, and an amount of the cathode active material may be relatively increased. Thus, capacity and power of the lithium secondary battery may be further improved.

The conductive material may be added to facilitate electron mobility between active material particles. For example, the conductive agent may include a carbon-based material such as graphite, carbon black, graphene, carbon nanotube, etc., and/or a metal-based material such as tin, tin oxide, titanium oxide, a perovskite material such as LaSrCoO₃ or LaSrMnO₃, etc.

As described with reference to FIG. 1, the anode 130 may include an anode current collector 125 and an anode active material layer 120 having a multi-layered structure. For convenience of descriptions, detailed illustration of the first anode active material layer 122 and the second anode active material layer 124 is omitted in FIG. 3.

The separation layer 140 may be interposed between the cathode 100 and the anode 130. The separation layer 140 may include a porous polymer film prepared from, e.g., a polyolefin-based polymer such as an ethylene homopolymer, a propylene homopolymer, an ethylene/butene copolymer, an ethylene/hexene copolymer, an ethylene/methacrylate copolymer, or the like. The separation layer 140 may also include a non-woven fabric formed from a glass fiber with a high melting point, a polyethylene terephthalate fiber, or the like.

In some embodiments, an area and/or a volume of the anode 130 (e.g., a contact area with the separation layer 140) may be greater than that of the cathode 100. Thus, lithium ions generated from the cathode 100 may be easily transferred to the anode 130 without a loss by, e.g., precipitation or sedimentation.

In exemplary embodiments, an electrode cell may be defined by the cathode 100, the anode 130 and the separation layer 140, and a plurality of the electrode cells may be stacked to form an electrode assembly 150 that may have e.g., a jelly roll shape. For example, the electrode assembly 150 may be formed by winding, laminating or folding of the separation layer 140.

The electrode assembly 150 may be accommodated together with an electrolyte in a case 160 to define the lithium secondary battery. In exemplary embodiments, a non-aqueous electrolyte may be used as the electrolyte.

For example, the non-aqueous electrolyte may include a lithium salt and an organic solvent. The lithium salt may be represented by Li⁺X⁻. An anion of the lithium salt X⁻ may include, e.g., F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻, etc.

The organic solvent may include, e.g., propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxy ethane, diethoxy ethane, vinylene carbonate, sulfolane, gamma-butyrolactone, propylene sulfite, tetrahydrofuran, etc. These may be used alone or in a combination thereof.

As illustrated in FIG. 2, an electrode tab (a cathode tab and an anode tab) may be formed from each of the cathode current collector 105 and the anode current collector 125 to extend to one end of the case 160. The electrode tabs may be welded together with the one end of the case 160 to be connected to an electrode lead (a cathode lead 107 and an anode lead 127) exposed at an outside of the case 160.

FIG. 2 illustrates that the cathode lead 107 and the anode lead 127 protrude from an upper side of the case 160 in a planar view, but locations of the electrode leads are not limited as illustrated in FIG. 2. For example, the electrode leads may protrude from at least one of both lateral sides of the case 160, or may protrude from a lower side of the case 160. Alternatively, the cathode lead 107 and the anode lead 127 may be formed to protrude from different sides of the case 160.

The lithium secondary battery may be fabricated into a cylindrical shape using a can, a prismatic shape, a pouch shape, a coin shape, etc.

Hereinafter, preferred embodiments are proposed to more concretely describe the present invention.

### Examples and Comparative Examples

### 1) Fabrication of anode

91.05 wt% of graphite and 6 wt% of silicon oxide (SiOx) as a first anode active material, 0.25 wt% of carbon nanotube (CNT) as a conductive material, 1.5 wt% of SBR as a first binder and 1.2 wt% of CMC as a thickener were mixed to form a first anode slurry.

85.05 wt% of graphite and 12 wt% of silicon oxide (SiOx) as a second anode active material, 0.25 wt% of carbon nanotube (CNT) as a conductive material, and 2.7 wt% of a copolymer of polyacrylic acid (PAA) and polyvinyl alcohol (PVA) as a second binder were mixed to from a second anode slurry. The second anode slurry was coated on the first anode slurry, and dried and pressed to prepare an anode.

A ratio of a content of the silicon-based active material included in a second anode active material layer relative to a content of the silicon-based active material included in a first anode active material layer among a total content of the silicon-based active material was adjusted to two.

### 2) Preparation of cathode and secondary battery

98.08 parts by weight of an NCM-based cathode active material, 0.6 parts by weight of a carbon black conductive material, 0.12 parts by weight of a dispersing agent, 1.2 parts by weight of a PVDF binder, and NMP were mixed to prepare a cathode slurry. The cathode slurry was coated on an aluminum substrate, dried and pressed to prepare a cathode.

The cathode and the anode prepared as described above were each notched with a predetermined size, and stacked with a separator (polyethylene, thickness: 13 µm) interposed between the cathode and the anode to form a battery cell, and each tab portion of the cathode and the anode was welded.

The welded cathode/separator/anode assembly was inserted in a pouch, and three sides of the pouch except for an electrolyte injection side were sealed. The tab portions were also included in sealed portions. An electrolyte was injected through the electrolyte injection side, and then the electrolyte injection side was also sealed. Subsequently, the above structure was impregnated for more than 12 hours.

The electrolyte was prepared by forming 1M LiPF₆ solution in a mixed solvent of ethylene carbonate (EC)/ethyl methyl carbonate (EMC)/diethylene carbonate (DEC) (25/45/30; volume ratio), and then adding 5 wt% of fluorinated ethylene carbonate (FEC), 0.5 wt% of propane sultone (PS), and 0.5 wt% of ethylene sulfate (ESA).

### Examples 2-11

Lithium secondary batteries were fabricated by the same method as that in Example 1, except that a content of the silicon-based active material based on a total weight of the anode active material layer or a content ratio of the silicon-based active material between the first anode active material layer and the second anode active material layer were adjusted as shown in Table 1.

### Comparative Examples 1-6

Lithium secondary batteries were fabricated by the same method as that in Example 1, except that a content of the silicon-based active material based on a total weight of the anode active material layer or a content ratio of the silicon-based active material between the first anode active material layer and the second anode active material layer were adjusted as shown in Table 1.

### Comparative Example 7

A lithium secondary battery was fabricated by the same method as that in Example 1, except that the second anode slurry was prepared by including 1.5 wt% of SBR as the second binder and 1.2 wt% of CMC as a thickener.

### Comparative Example 8

A lithium secondary battery was fabricated by the same method as that in Example 1, except that the first anode slurry was prepared by including 2.7 wt% of the copolymer of PAA and PVA as the first binder, and the second anode slurry was prepared by including 1.5 wt% of SBR as the second binder and 1.2 wt% of CMC as a thickener.

### Experimental Example

### 1) Capacity Retention (cycle retention)

After repeating charging (CC-CV 0.3 C 4.2V 0.05C CUT-OFF) and discharging (CC 0.5C 2.5V CUT-OFF) of the lithium secondary batteries according to the above-described Examples and Comparative Examples 100 times, each capacity retention was measured at room temperature by calculating a discharge capacity at the 100th cycle as a percentage relative to a discharge capacity at the 1st cycle.

### 2) Charge resistance (2C/0.3C charge capacity)

When a total charge capacity by 0.3C-rate charging (to 4.2V) the lithium secondary batteries according to the above-described Examples and Comparative Examples was set as 100%, a charge degree of 2C-rate charging (to 4.2V) was measured to evaluate a charge resistance.

The evaluation results are shown in Table 1 below.

**[Table 1]**

| No. | total content of SiOx (0<x<2) based on a total weight of the anode active material layer (wt%) | SiOx in the second anode active material layer based on a total weight of the anode active material layer (wt%) | SiOx in the first anode active material layer based on a total weight of the anode active material layer (wt%) | SiOx ratio (second anode active material layer/first anode active material layer) | capacity retention (100th 25°C) (%) | 2C/0.3C charge capacity (%) |
|---|---|---|---|---|---|---|
| Example 1 | 9 | 6 | 3 | 2 | 98.7 | 83.2 |
| Example 2 | 9 | 6.5 | 2.5 | 2.6 | 99.4 | 84 |
| Example 3 | 9 | 7 | 2 | 3.5 | 99.6 | 84.2 |
| Example 4 | 9 | 7.2 | 1.8 | 4 | 99.4 | 84.3 |
| Example 5 | 9 | 7.45 | 1.55 | 4.8 | 99.6 | 84.3 |
| Example 6 | 6 | 4 | 2 | 2 | 99.0 | 80.9 |
| Example 7 | 6 | 4.5 | 1.5 | 3 | 99.7 | 81.4 |
| Example 8 | 6 | 4.9 | 1.1 | 4.5 | 98.4 | 81.6 |
| Example 9 | 4 | 2.7 | 1.3 | 2.1 | 99.0 | 80 |
| Example 10 | 4 | 3 | 1 | 3 | 99.8 | 80.5 |
| Example 11 | 4 | 3.3 | 0.7 | 4.7 | 99.5 | 80.6 |
| Comparative Example 1 | 9 | 4.5 | 4.5 | 1 | 96.4 | 81.3 |
| Comparative Example 2 | 9 | 7.5 | 1.5 | 5 | 96.7 | 83.5 |
| Comparative Example 3 | 6 | 3 | 3 | 1 | 97.9 | 79.5 |
| Comparative Example 4 | 6 | 5 | 1 | 5 | 97.5 | 81.5 |
| Comparative Example 5 | 4 | 2 | 2 | 1 | 98.6 | 78.8 |
| Comparative Example 6 | 4 | 3.4 | 0.6 | 5.7 | 96.4 | 80.8 |
| Comparative Example 7 | 9 | 6 | 3 | 2 | 90.2 | 83 |
| Comparative Example 8 | 9 | 6 | 3 | 2 | 86.9 | 83.1 |

Referring to Table 1, in Examples where the second anode active material layer included the second binder, and the SiOx ratio of the second anode active material layer relative to the first anode active material layer among the total content of the silicon-based active material was 1.25 or more and less than 5, preferably 2 or more and less than 5, improved cycle properties were achieved. Additionally, the charge resistance value of the cell was reduced, so that the charge capacity and the fast charge properties were improved.

In Comparative Examples 1 to 6 where the SiOx ratio of the second anode active material layer relative to the first anode active material layer among the total content of the silicon-based active material was not within the range of Examples, the capacity, low resistance and fast charging properties were deteriorated compared to those from Examples.

In Comparative Examples 7 and 8 where the second anode active material layer did not include the second binder, expansion of SiOx was not sufficiently suppressed by the binder in the second anode active material layer, and the life-span properties were explicitly degraded.

## Claims

1. An anode for a lithium secondary battery, comprising:
an anode current collector; and
an anode active material layer comprising a first anode active material layer and a second anode active material layer sequentially disposed on a surface of the anode current collector, each of the first anode active material layer and the second anode active material layer including a silicon-based active material,
wherein a ratio of a content of the silicon-based active material in the second anode active material layer relative to a content of the silicon-based active material in the first anode active material layer among a total content of the silicon-based active material included in the anode active material layer is 2 or more, and less than 5, and
the second anode active material layer includes a second binder including at least one selected from the group consisting of polyacrylic acid, polyvinyl alcohol, polyacrylonitrile, polyacrylamide, polyvinyl acetate and a copolymer thereof, wherein an amount of the second binder is in a range from 1 wt% to 20 wt% based on a total weight of the second anode active material layer.

2. The anode for a lithium secondary battery of claim 1, wherein the first anode active material layer comprises a styrene-butadiene rubber (SBR) as a first binder.

3. The anode for a lithium secondary battery of claim 1, wherein the silicon-based active material includes at least one selected from the group consisting of silicon (Si), a silicon alloy, a silicon oxide, a silicon-carbon (Si-C) composite and a silicon alloy-based carbon composite.

4. The anode for a lithium secondary battery of claim 3, wherein the silicon oxide includes SiOx (0<x<2).

5. The anode for a lithium secondary battery of claim 1, wherein a content of the silicon-based active material based on a total weight of the anode active material layer is in a range from 1 wt% to 20 wt%.

6. The anode for a lithium secondary battery of claim 1, wherein a content of the silicon-based active material based on a total weight of the anode active material layer is in a range from 4 wt% to 15 wt%.

7. The anode for a lithium secondary battery of claim 1, wherein the second anode active material layer further includes a carbon-based active material.

8. The anode for a lithium secondary battery of claim 7, wherein the carbon-based active material comprises at least one selected from the group consisting of artificial graphite, natural graphite, hard carbon, soft carbon, coke, carbon black and carbon fiber.

9. The anode for a lithium secondary battery of claim 1, wherein the first anode active material layer is in contact with the surface of the anode current collector, and the second anode active material layer is in contact with a top surface of the first anode active material layer.

10. A lithium secondary battery, comprising:
the anode for a lithium secondary battery of claim 1; and
a cathode facing the anode.

## Patentansprüche

1. Anode für eine Lithium-Sekundärbatterie, umfassend:
einen Anoden-Stromabnehmer; und
eine Anoden-Aktivmaterialschicht, umfassend eine erste Anoden-Aktivmaterialschicht und eine zweite Anoden-Aktivmaterialschicht, die nacheinander auf einer Oberfläche des Anoden-Stromabnehmers angeordnet sind, wobei jede der ersten Anoden-Aktivmaterialschicht und der zweiten Anoden-Aktivmaterialschicht ein Aktivmaterial auf Siliziumbasis enthält,
wobei ein Verhältnis eines Gehalts des Aktivmaterials auf Siliziumbasis in der zweiten Anoden-Aktivmaterialschicht relativ zu einem Gehalt des Aktivmaterials auf Siliziumbasis in der ersten Anoden-Aktivmaterialschicht unter einem Gesamtgehalt des Aktivmaterials auf Siliziumbasis, das in der Anoden-Aktivmaterialschicht enthalten ist, 2 oder mehr und weniger als 5 beträgt, und
die zweite Anoden-Aktivmaterialschicht ein zweites Bindemittel enthält, das mindestens eines enthält, das aus der Gruppe ausgewählt ist, die aus Polyacrylsäure, Polyvinylalkohol, Polyacrylnitril, Polyacrylamid, Polyvinylacetat und einem Copolymer davon besteht, wobei eine Menge des zweiten Bindemittels in einem Bereich von 1 Gew.-% bis 20 Gew.-% liegt, bezogen auf ein Gesamtgewicht der zweiten Anoden-Aktivmaterialschicht.

2. Anode für eine Lithium-Sekundärbatterie nach Anspruch 1, wobei die erste Anoden-Aktivmaterialschicht einen Styrol-Butadien-Kautschuk (SBR) als ein erstes Bindemittel umfasst.

3. Anode für eine Lithium-Sekundärbatterie nach Anspruch 1, wobei das Aktivmaterial auf Siliziumbasis mindestens eines enthält, das aus der Gruppe ausgewählt ist, die aus Silizium (Si), einer Siliziumlegierung, einem Siliziumoxid, einem Silizium-Kohlenstoff(Si-C)-Verbundstoff und einem Kohlenstoffverbundstoff auf Siliziumlegierungsbasis besteht.

4. Anode für eine Lithium-Sekundärbatterie nach Anspruch 3, wobei das Siliziumoxid SiOx (0<x<2) enthält.

5. Anode für eine Lithium-Sekundärbatterie nach Anspruch 1, wobei ein Gehalt des Aktivmaterials auf Siliziumbasis, bezogen auf ein Gesamtgewicht der Anoden-Aktivmaterialschicht, in einem Bereich von 1 Gew.-% bis 20 Gew.-% liegt.

6. Anode für eine Lithium-Sekundärbatterie nach Anspruch 1, wobei ein Gehalt des Aktivmaterials auf Siliziumbasis, bezogen auf ein Gesamtgewicht der Anoden-Aktivmaterialschicht, in einem Bereich von 4 Gew.-% bis 15 Gew.-% liegt.

7. Anode für eine Lithium-Sekundärbatterie nach Anspruch 1, wobei die zweite Anoden-Aktivmaterialschicht ferner ein Aktivmaterial auf Kohlenstoffbasis enthält.

8. Anode für eine Lithium-Sekundärbatterie nach Anspruch 7, wobei das Aktivmaterial auf Kohlenstoffbasis mindestens eines umfasst, das aus der Gruppe ausgewählt ist, die aus künstlichem Graphit, natürlichem Graphit, Hartkohlenstoff, weichem Kohlenstoff, Koks, Ruß und Kohlenstofffaser besteht.

9. Anode für eine Lithium-Sekundärbatterie nach Anspruch 1, wobei die erste Anoden-Aktivmaterialschicht mit der Oberfläche des Anoden-Stromabnehmers in Kontakt steht und die zweite Anoden-Aktivmaterialschicht mit einer oberen Oberfläche der ersten Anoden-Aktivmaterialschicht in Kontakt steht.

10. Lithium-Sekundärbatterie, umfassend:
die Anode für eine Lithium-Sekundärbatterie nach Anspruch 1; und
eine Kathode, die der Anode zugewandt ist.

## Revendications

1. Anode pour batterie secondaire au lithium, comprenant :
un collecteur de courant d'anode ; et
une couche de matériau actif d'anode comprenant une première couche de matériau actif d'anode et une deuxième couche de matériau actif d'anode disposées séquentiellement sur une surface du collecteur de courant d'anode, chacune des première et deuxième couches de matériau actif d'anode comprenant un matériau actif à base de silicium,
dans laquelle le rapport entre la teneur en matériau actif à base de silicium dans la deuxième couche de matériau actif d'anode et la teneur en matériau actif à base de silicium dans la première couche de matériau actif d'anode, par rapport à la teneur totale en matériau actif à base de silicium inclus dans la couche de matériau actif d'anode, est supérieur ou égal à 2 et inférieur à 5, et
la deuxième couche de matériau actif d'anode comprend un deuxième liant comprenant au moins un élément choisi parmi le groupe constitué de l'acide polyacrylique, de l'alcool polyvinylique, du polyacrylonitrile, du polyacrylamide, de l'acétate de polyvinyle et d'un copolymère de ceux-ci, dans lequel la quantité du deuxième liant est comprise dans une plage de 1 % en poids à 20 % en poids par rapport au poids total de la deuxième couche de matériau actif d'anode.

2. Anode pour batterie secondaire au lithium selon la revendication 1, dans laquelle la première couche de matériau actif d'anode comprend un caoutchouc styrène-butadiène (SBR) comme premier liant.

3. Anode pour batterie secondaire au lithium selon la revendication 1, dans laquelle le matériau actif à base de silicium comprend au moins un élément choisi dans le groupe constitué du silicium (Si), d'un alliage de silicium, d'un oxyde de silicium, d'un composite silicium-carbone (Si-C) et d'un composite carbone à base d'alliage de silicium.

4. Anode pour batterie secondaire au lithium selon la revendication 3, dans laquelle l'oxyde de silicium comprend du SiOx (0<x<2).

5. Anode pour batterie secondaire au lithium selon la revendication 1, dans laquelle la teneur en matériau actif à base de silicium, par rapport au poids total de la couche de matériau actif de l'anode, est comprise entre 1 % et 20 % en poids.

6. Anode pour batterie secondaire au lithium selon la revendication 1, dans laquelle la teneur en matériau actif à base de silicium par rapport au poids total de la couche de matériau actif de l'anode est comprise entre 4 % et 15 % en poids.

7. Anode pour batterie secondaire au lithium selon la revendication 1, dans laquelle la deuxième couche de matériau actif d'anode comprend en outre un matériau actif à base de carbone.

8. Anode pour batterie secondaire au lithium selon la revendication 7, dans laquelle le matériau actif à base de carbone comprend au moins un élément choisi dans le groupe constitué par le graphite artificiel, le graphite naturel, le carbone dur, le carbone tendre, le coke, le noir de carbone et la fibre de carbone.

9. Anode pour batterie secondaire au lithium selon la revendication 1, dans laquelle la première couche de matériau actif d'anode est en contact avec la surface du collecteur de courant d'anode, et la deuxième couche de matériau actif d'anode est en contact avec une surface supérieure de la première couche de matériau actif d'anode.

10. Batterie secondaire au lithium, comprenant :
l'anode pour une batterie secondaire au lithium selon la revendication 1 ; et
une cathode faisant face à l'anode.
